# EUROPEAN PATENT APPLICATION

(11) **EP 3 721 708 A1**
(43) Date of publication of application: **14.10.2020**
(21) Application number: 20000126.1
(22) Date of filing: 23.03.2020
(51) Int. Cl.: A01K 97/06

(54) **A BOX FOR FISHING TACKLE**

(30) Priority: 08.04.2019 GB 201904988
(71) Applicant: Korda Developments Limited, Basildon, Essex SS14 0HW (GB)
(72) Inventor: Brandon, Dalton, Huntingdon, Cambridgeshire PE26 2LE (GB)
(74) Representative: Jones, Graham Henry

(57) **Abstract**

A box (2) for fishing tackle, which box (2) comprises:
(i) a body portion (4);
(ii) a lid (6) for closing the body portion (4); and
(iii) magnetic fastener means (8) which is for fastening the lid (6) on the body portion (4), and which comprises a first part (10) for fitting on the body portion (4) and a second part (12) for fitting on the lid (6),
and wherein at least one of the first part (10) and the second part (12) comprises:
(iv) a magnet (14);
(v) a first retainer (16) for retaining the magnet (14);
(vi) a second retainer (18) for retaining the first retainer (16) and the magnet (14); and
(vii) a holder (20) for holding the first retainer (16) such that it retains the magnet (14), and for holding the second retainer (18) such that it retains the first retainer (16) and the magnet (14).

## Description

This invention relates to a box for fishing tackle and, more especially, this invention relates to a box which is for fishing tackle and which comprises magnetic fastener means.

Boxes which are for fishing tackle and which comprise magnetic fastener means are known. The known boxes comprise a body portion, a lid for closing the body portion, and magnetic fastener means for fastening the lid on the body portion. The magnetic fastener means typically comprises a first part for fitting on the body portion and a second part for fitting on the lid. At least one of the first part and the second part is a magnet. The magnet is often not sufficiently securely held in place. Typically the magnet is glued in place. The magnet often becomes loose and falls out.

It is an aim of the present invention to prevent or reduce the above mentioned problem.

Accordingly, in one non-limiting embodiment of the present invention there is provided a box for fishing tackle, which box comprises:
(i) a body portion;
(ii) a lid for closing the body portion; and
(iii) magnetic fastener means which is for fastening the lid on the body portion, and which comprises a first part for fitting on the body portion and a second part for fitting on the lid,
and wherein at least one of the first part and the second part comprises:
(iv) a magnet;
(v) a first retainer for retaining the magnet;
(vi) a second retainer for retaining the first retainer and the magnet; and
(vii) a holder for holding the first retainer such that it retains the magnet, and for holding the second retainer such that it retains the first retainer and the magnet.

The first and the second retainer means are able to retain the magnet securely in position, and thereby avoid the above mentioned problem of the magnet becoming loose and falling out.

Preferably, the box is one in which the holder holds the first retainer consequent upon an assembly movement of the first retainer in a first direction, in which the holder retains the second retainer consequent upon an assembly movement of the second retainer in a second direction, and in which the second direction is different to the first direction. The box is then easily assembled during manufacture, with the first retainer and the second retainer easily being inserted in position. Preferably, the second direction is perpendicular to the first direction. Other first and second directions may be employed. Typically the first direction is perpendicular to a base of the body portion and/or perpendicular to the lid, and the second direction is parallel to the base of the body portion and/or parallel to the lid.

The box may be one in which both the first part and the second part comprise the magnet, the first retainer, the second retainer, and the holder.

Alternatively, the box may be one in which only one of the first part and the second part comprises the magnet, the first retainer, the second retainer and the holder. In this case, the first or the second part provided with the magnet, the first retainer, the second retainer and the holder may be in the body portion or the lid. The other one of the body portion and the lid that does not have the magnet, the first retainer, the second retainer and the holder can then be provided with material that is attracted to the magnet. This material may be another magnet or simply a material, for example a metal, that is attracted to a magnet. The material may be in strip form or in any other suitable shape.

Preferably, the first retainer is a clip first retainer which clips to the holder. Other types of first retainer may be employed.

Preferably, the second retainer is a clip second retainer which clips to the holder. Other types of second retainer may be employed.

The holder is preferably made of a plastics material. Other materials may be employed. When the holder is made of a plastics material, then the holder may be a moulded holder.

The body portion may comprise body portion compartments for receiving the fishing tackle. The lid may comprise lid compartments for receiving the fishing tackle. The body portion compartments and the lid compartments may be as in known boxes for fishing tackle.

Embodiments of the invention will now be described solely by way of example and with reference to the accompanying drawings in which:
Figure 1 is a perspective view from the rear and one side of a body portion for a box for fishing tackle;
Figure 2 is an enlarged view of an upper right corner of the body portion shown in Figure 1;
Figure 3 is a perspective view from the front and one side of a box for fishing tackle, with the box having a body portion as shown in Figure 1, and with the box also having a preferred lid for closing the body portion; and
Figure 4 shows the box of Figure 3 but in a closed position.

Referring to the drawings, there is shown a box 2 for fishing tackle. The box 2 comprises a body portion 4 and a lid 6 for closing the body portion 4. The box 2 also comprises magnetic fastener means 8 for fastening the lid 6 on the body portion 4. The magnetic fastener means 8 comprises a first part 10 for fitting on the body portion 4, and a second part 12 for fitting on the lid 6.

At least one of the first part 10 and the second part 12 is constructed to comprise a magnet 14, a first retainer 16 for retaining the magnet 14, a second retainer 18 for retaining the first retainer 16 and the magnet 14, and a holder 20. The holder 20 is for holding the first retainer 16 such that it retains the magnet 14. The holder 20 is also for retaining the second retainer 18 such that it retains the first retainer 16 and the magnet 14.

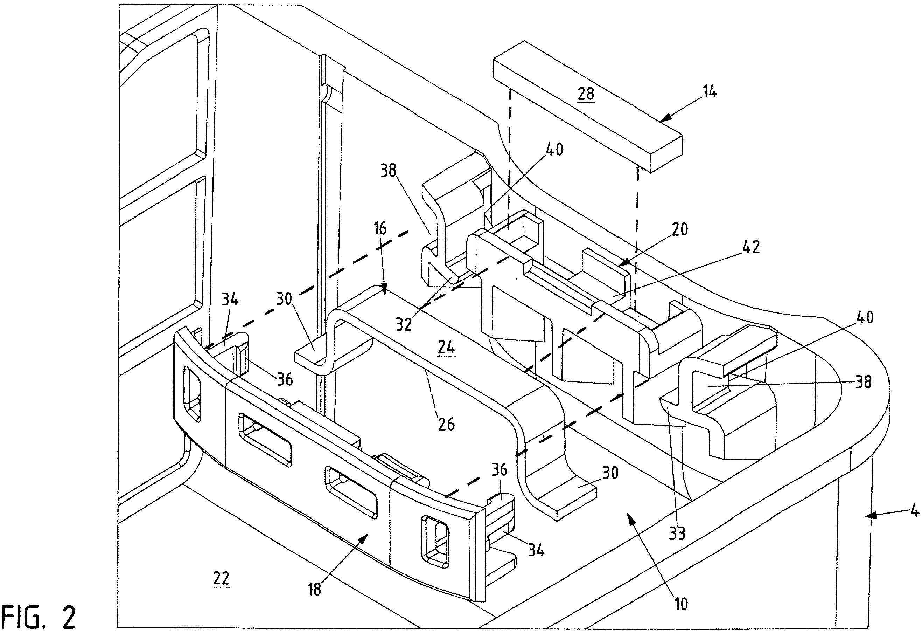

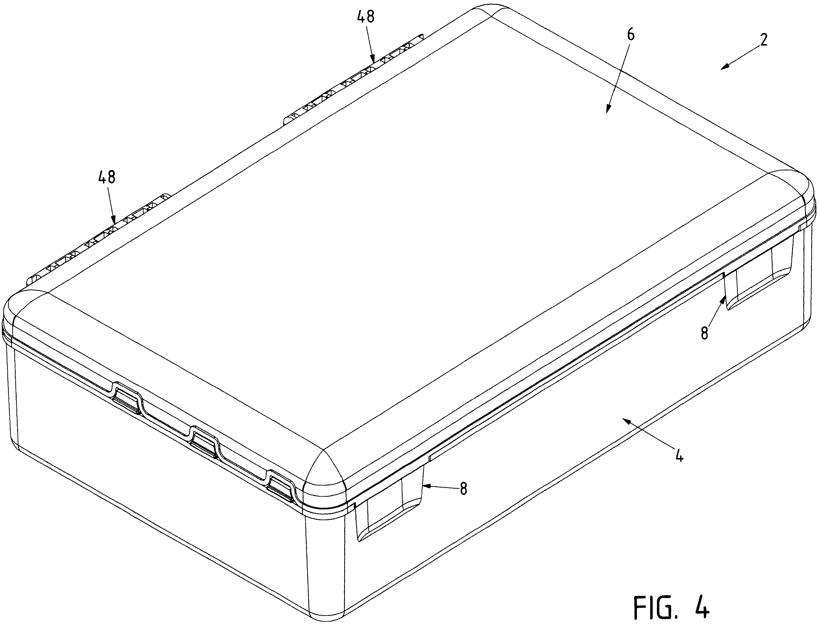

As can best be appreciated from Figure 2. the holder 20 holds the first retainer 16 consequent upon an assembly movement of the first retainer 16 in a first direction. The holder 20 also retains the second retainer 18 consequent upon an assembly movement of the second retainer 18 in a second direction. The second direction is different to the first direction. More specifically, the second direction is perpendicular to the first direction. The first direction is perpendicular to a base 22 of the body portion 4 and/or perpendicular to the lid 6 when the lid 6 is in the closed position shown in Figure 4. The second direction is parallel to the base 22 of the body portion 4 and/or parallel to the lid 6 when the lid 6 is in the closed position shown in Figure 4.

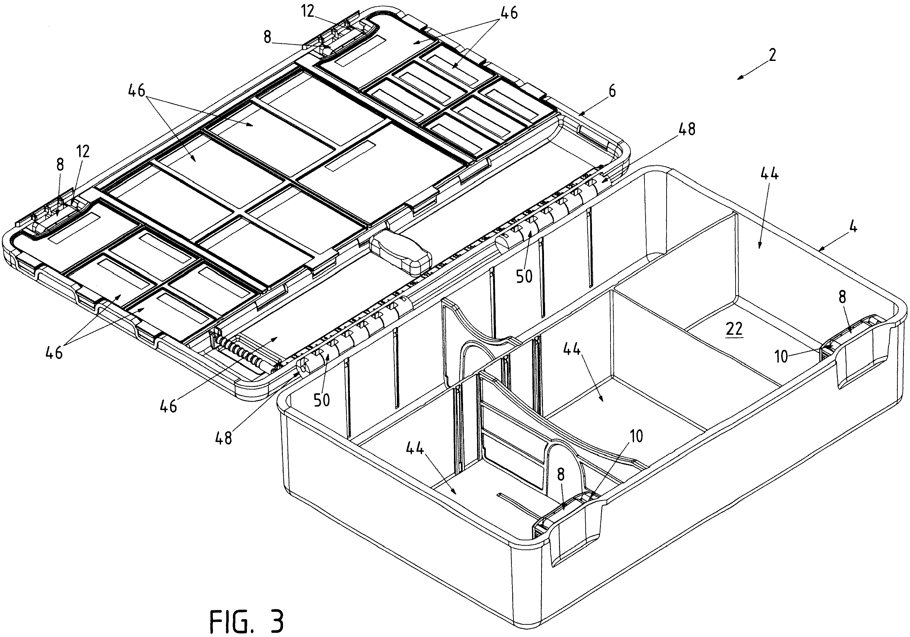

Figure 3 shows how both the first part 10 and the second part 12 each comprises the magnet 14, the first retainer 16, the second retainer 18, and the holder 20. Both the first and second parts 10, 12 are provided on two corners of the body portion 4, and on two corners of the lid 6. Thus the box 4 comprises two of the magnets 14 on the body portion 4, and two of the magnets 14 on the lid 6. The magnets 14 give strong magnetic fastening. If desired, only one of the body portion 4 or the lid 6 may be provided with one or two of the first parts 10, in which case the other of the body portion 4 and the lid 6 may be provided with one or two of the second parts 12 which may comprise a magnet or a material which is not a magnet but which is attracted to a magnet.

As can best be appreciated from Figure 2, the first part 10 is such that the first retainer 16 has a central mounting portion 24 which receives on its under surface 26 the upper surface 28 of the magnet 14. The magnet 14 stays in place during assembly of the box 2 by magnetism due to the first retainer 16 being made of a magnetic material, for example a metal. The first retainer 16 has hook ends 30 which hook under shelf members 32 in the holder 20. The second retainer 18 has legs 34 which terminate in hook ends 36. The legs 34 slide into channels 38 in the holder 20 such that the hook ends 36 clip behind far end walls 40 of the channels 38. Thus the first retainer means 16 is a clip first retainer means 16, and the second retainer means 18 is a clip second retainer means 18.

The first part 10 is easily assembled during manufacture of the box 2. It is only necessary to secure the magnet 14 to the first retainer 16. The first retainer 16 is then able to be pushed into a longitudinal recess 42 in the holder 20, with the pushing being an assembly movement which is perpendicular to the base 22 of the body portion 4. The hook ends 30 of the first retainer 16 clip into position to securely hold the magnet 14. The second retainer 18 is then pushed into the holder 20 with an assembly movement which is perpendicular to the movement of the first retainer means 16 and which is parallel to the base 22 of the body portion 4, and thus also parallel to the lid 6 when the lid 6 is in the closed position shown in Figure 4. The second retainer 18 thus clips into position to securely retain the first retainer 16 in the direction of assembly movement of the second retainer 18. The first retainer 16 securely retains the magnet 14 in the direction of assembly movement of the first retainer 16. The first retainer 16, the second retainer 18 and the holder 20 thus combine together to retain the magnet 14 against movement in any direction, Thus the magnet 14 is securely held in position, and in a manner which is easily accomplished during manufacturing assembly of the box 2. The disadvantages of securing the magnet 14 in position using an adhesive or other similar means and which often result in the magnet becoming loose, are thus avoided.

As can best be seen from Figure 3, the body portion 4 comprises body portion compartments 44 for receiving the fishing tackle. The lid 6 comprises lid compartments 46 for receiving the fishing tackle.

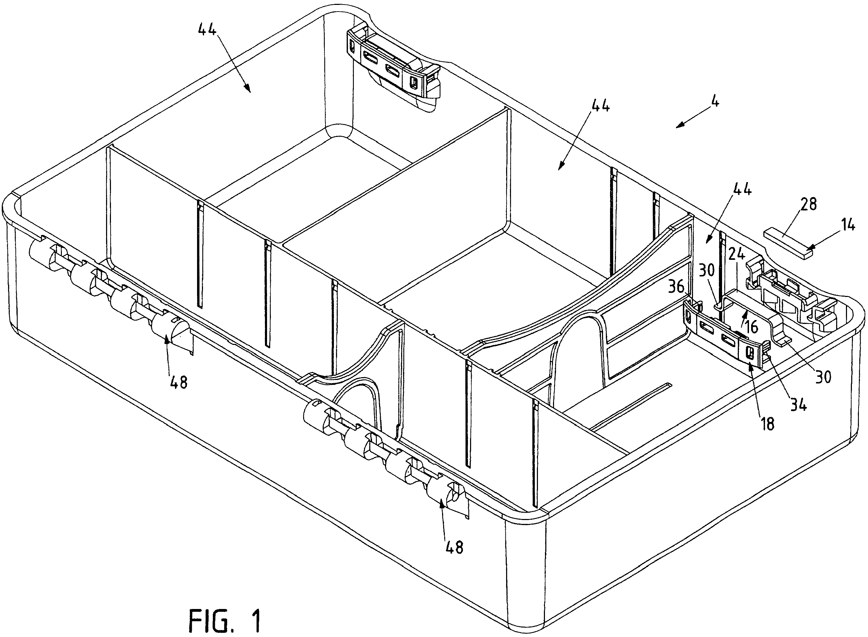

As can be seen from Figures 1 and 3, the lid 6 is mounted by two hinges 48 to the body portion 4.

It is to be appreciated that the embodiments of the invention described above with reference to the accompanying drawings have been given by way of example only and that modifications may be effected. Thus, for example, the box 2 may be of another shape than that shown. More or less of the magnetic fastener means 8 may be employed. Other constructions for connecting the lid 6 to the body portion 4 may be employed. Individual components shown in the drawings are not limited to use in their drawings and they may be used in other drawings and in all aspects of the invention. The invention also extends to the individual components mentioned and/or shown above, taken singly or in any combination.

## Claims

1. A box for fishing tackle, which box comprises
(i) a body portion;
(ii) a lid for closing the body portion; and
(iii) magnetic fastener means which is for fastening the lid on the body portion, and which comprises a first part for fitting on the body portion and a second part for fitting on the lid,
and wherein at least one of the first part and the second part comprises:
(iv) a magnet;
(v) a first retainer for retaining the magnet;
(vi) a second retainer for retaining the first retainer and the magnet; and
(vii) a holder for holding the first retainer such that it retains the magnet, and for holding the second retainer such that it retains the first retainer and the magnet.

2. A box according to claim 1 in which the holder holds the first retainer consequent upon an assembly movement of the first retainer in a first direction, in which the holder retains the second retainer consequent upon an assembly movement of the second retainer in a second direction, and in which the second direction is different to the first direction.

3. A box according to claim 2 in which the second direction is perpendicular to the first direction.

4. A box according to any one of the preceding claims in which both the first part and the second part comprise the magnet, the first retainer, the second retainer and the holder.

5. A box according to any one of claims 1 - 3 in which only one of the first part and the second part comprises the magnet, the first retainer, the second retainer and the holder.

6. A box according to any one of the preceding claims in which the first retainer is a clip first retainer which clips to the holder.

7. A box according to any one of the preceding claims in which the second retainer is a clip second retainer which clips to the holder.

8. A box according to any one of the preceding claims in which the body portion comprises body portion compartments for receiving the fishing tackle.

9. A box according to any one of the preceding claims in which the lid comprises lid compartments for receiving the fishing tackle.
